**Europäisches Patentamt**

**European Patent Office**

**Office européen des brevets**

(19)

(11) Veröffentlichungsnummer : **0 101 881**
**B1**

(12) **EUROPÄISCHE PATENTSCHRIFT**

(45) Veröffentlichungstag der Patentschrift :
05.03.86

(21) Anmeldenummer : **83107044.6**

(22) Anmeldetag : **19.07.83**

(51) Int. Cl.⁴ : **B 29 C 45/22**

(54) **Heisskanalmehrfachangiessbuchse.**

(30) Priorität : **07.08.82 DE 8222390 U**

(43) Veröffentlichungstag der Anmeldung :
**07.03.84 Patentblatt 84/10**

(45) Bekanntmachung des Hinweises auf die Patenterteilung : **05.03.86 Patentblatt 86/10**

(84) Benannte Vertragsstaaten :
**AT BE CH DE FR GB IT LI LU NL SE**

(56) Entgegenhaltungen :
**EP-A- 0 013 118**
**EP-A- 0 032 983**
**DE-A- 2 745 146**
**DE-A- 2 852 458**
**DE-B- 2 356 764**
**US-A- 4 184 836**

(73) Patentinhaber : **Jetform Heisskanalnormalien und Zubehör GmbH**
**Schuckertstrasse 18**
**D-7255 Rutesheim (DE)**

(72) Erfinder : **Schulte, Wolfgang**
**Sterbecker Strasse 45**
**D-5885 Schalksmühle-Heedfeld (DE)**

(74) Vertreter : **Otte, Peter, Dipl.-Ing.**
**Tiroler Strasse 15**
**D-7250 Leonberg (DE)**

## Beschreibung

Die Erfindung betrifft eine Heißkanalmehrfachangießbuchse für seitliche Tunnelanbindung, mit einem Fuß und einem durch ein Heizelement beheizten Schaft und einem darin angeordneten zentralen Heißkanal, ferner mit einem beheizten Verteilerkopf, der radial ausgerichtete Knäle enthält.

Eine Heißkanalmehrfachangießbuchse dieser Art ist in der EP-A-32 983 beschrieben. Die Wendelrohrpatrone des Schaftes ist in den Kopf der Angießbuchse hinein verlängert, damit auch der Kopf beheizt wird. Da sich die Heißkanalmehrfachangießbuchse in einer Kammer des düsenseitigen, gekühlten Werkzeugs befindet, ist der Kopf ganz anderen Abkühlungsverhältnissen als der Schaft ausgesetzt. Insbesondere wenn der Kopf großflächig ausgebildet ist und eine Vielzahl von Angießkanälen aufnimmt, ist eine gleichmäßige Wärmesteuerung von Schaft und Kopf nicht möglich. Es kann dann zu einer Überhitzung des Werkstoffes innerhalb des Schaftes oder zu einer Unterkühlung im Kopf kommen. Beides führt zur Ausbildung von Fließstrukturen in den Spritzgußerzeugnissen und ist für den Arbeitsablauf innerhalb der Spritzgießmaschine nachteilig.

Aufgabe der Erfindung ist eine solche Ausbildung des Kopfes, daß bei Anbindung einer Vielzahl von Formnestern eine genaue Wärmesteuerung bzw. -regelung möglich ist. Auch ein großflächiger Kopf mit einer Vielzahl von Angießkanälen soll so beheizt werden können, daß der Werkstoff immer im plastischen Zustand gehalten wird und eine Unterkühlung unterbleibt.

Diese Aufgabe wird nach der Erfindung durch folgende Merkmale gelöst :

a. der Kopf ist plattenförmig ausgebildet und überragt den Durchmesser des Schaftes um ein Mehrfaches (Zwei- bis Fünffaches ;

b. der Kopf nimmt mindestens vier radial ausgerichtete Angießkanäle auf ;

c. der Kopf besitzt eine an den Schaft angrenzende ebene Ringfläche und eine äußere Abdeckschürze ;

d. an die Ringfläche ist ein Kupferring angesetzt ;

e. der Kupferring nimmt eine spiralförmig angeordnete Wendelrohrpatrone auf.

Die Erfindung unterscheidet sich dadurch in nicht naheliegender Weise vom Stand der Technik, daß der großflächig ausgebildete Kopf durch einen beheizten Kupferring erwärmt wird. So ist eine gleichmäßige Beheizung des Kopfes unabhängig von dem Schaft möglich. Damit läßt sich der Werkstoff innerhalb des Kopfes in einem plastischen Zustand halten, so daß Erkaltungsstrukturen oder Fließstrukturen vermieden werden können. Die Heißkanalmehrfachangießbuchse eignet sich somit für das Angießen einer Vielzahl von Formnestern, z. B. 6, 8 oder bis zu 16 Formnestern. Die Wärmeverluste des großflächigen Kopfes lassen sich durch die Kopfheizung leicht kompensieren, ohne daß in dem zentralen Heißkanal eine Überhitzung auftritt.

In weiterer Ausbildung der Erfindung ist vorgesehen, daß der Kopf einen Thermofühler enthält. Dieser Thermofühler ermöglicht eine besondere Temperatursteuerung bzw. -regelung des Kopfes, um eine übermäßige Abkühlung des Kopfes auszuschließen. In den großflächigen Kopf, der weit in die Werkzeugplatten hineinragt und damit einer starken Abkühlung ausgesetzt ist, kann eine große Wärmemenge eingespeist werden, um das Material auf einer optimalen Temperatur zu halten. Trotz dieser großen Wärmezufuhr im Kopfbereich kann die Wärmezufuhr im Bereich des Schaftes klein gehalten werden, so daß im Bereich des Schaftes die Gefahr einer Überhitzung des Werkstoffes ausgeschlossen ist.

Ferner sieht die Erfindung vor, daß der Kupferring eine Spiralnut zur Aufnahme der Wendelrohrpatrone aufweist. Mit dieser Ausbildung wird ein besonders vollständiger Wärmeübergang von der Wendelrohrpatrone auf den Kupferring sichergestellt, weil die Wendelrohrpatrone von den Wänden der Spiralnut weitgehend umschlossen ist.

Damit die Wärme auf den Kopf konzentriert wird, sieht die Erfindung vor, daß der Kupferring mit der Wendelrohrpatrone durch einen Abdeckring abgeschlossen ist.

In Weiterbildung der Erfindung ist vorgesehen, daß auf den Schaft schraubenförmig eine Wendelrohrpatrone gewickelt und daß ein Thermofühler in einem Axialschlitz angeordnet ist. Die Wendelrohrpatrone zur Beheizung des Schaftes ist schraubenlinienförmig mit variabler Steigung gewickelt, damit die Beheizung des zentralen Heißkanals gleichmäßig über die gesamte Länge und optimal möglich ist. Dieser zentrale Heißkanal wird durch den genannten Thermofühler gesondert geregelt, so daß der Werkstoff innerhalb des Heißkanals gegen Überhitzung geschützt ist.

Die Erfindung sieht ferner vor, daß der Fuß eine gesonderte Beheizung aufweist. Damit ist eine weitere Verbesserung der Wärmeführung innerhalb der Heißkanalmehrfachangießbuchse sichergestellt.

Schließlich sieht die Erfindung vor, daß die Stirnfläche des Kopfes eine galvanische Wärmeisolierschicht aufweist. Diese ist nach dem Prinzip der Schwarzspiegelung wirksam. Dies ist insbesondere dann wichtig, wenn die Heißkanalmehrfachangießbuchse über die Teilungsebene des Werkzeugs vorsteht und während der Öffnungsphase des Werkzeugs besonders starker Abkühlung ausgesetzt ist.

Ausführungsformen der Erfindung werden im folgenden unter Bezugnahme auf die anliegende Zeichnung erläutert, in der darstellen :

Figur 1 eine Ansicht einer Heißkanalmehrfachangießbuchse, zur Hälfte geschnitten,

Figur 2 eine Draufsicht auf Fig. 1,

Figur 3 einen Teilschnitt durch den Kopf einer abgewandelten Ausführungsform einer Heißkanalmehrfachangießbuchse und

Figur 4 einen Schnitt nach der Linie IV-IV in Fig. 3 mit abgenommenem Schaftrohr und Abdeckring.

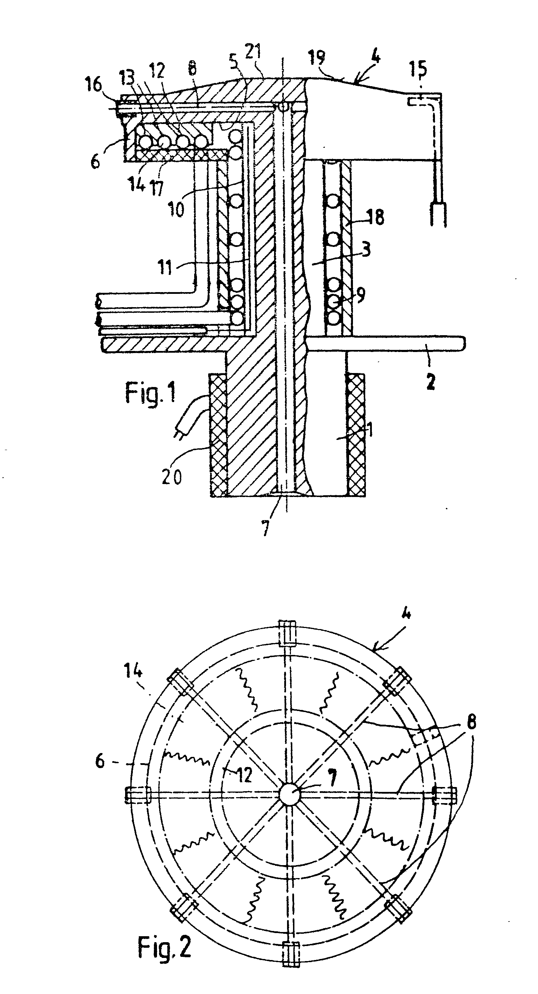

Eine Heißkanalmehrfachangießbuchse besteht in üblicher Weise aus einem entsprechenden Stahl. An einen Fuß 1 schließt eine Zentrierplatte 2 an. Darauf folgt ein Schaft 3, der einen plattenförmigen Kopf 4 trägt. Dieser plattenförmige Kopf ladet weit aus und überragt den Durchmesser des Schaftes 3 um ein Mehrfaches (Zwei- bis Fünffaches). Der Kopf 4 weist auf der dem Schaft 3 zugewandten Seite eine ebene Ringfläche 5 auf, an die am Außenrand eine Abdeckschürze 6 anschließt. Der Fuß 1, die Zentrierplatte 2 und der Schaft 3 sind normalerweise gesonderte Teile, die durch Zentrierverbindungen und Schraubverbindungen zusammengehalten sind. Die Darstellung der Fig. 1 ist in der Hinsicht schematisch zu verstehen und zeigt nur die Außenform von Fuß 1, Zentrierplatte 2 und Schaft 3.

Innerhalb des Fußes 1 und des Schaftes 3 verläuft ein zentraler Heißkanal 7, an den sich innerhalb des Kopfes 4 mehrere radial ausgerichtete Angießkanäle 8 anschließen. Es sind mindestens vier Angießkanäle 8 vorhanden. Die Zahl der Angießkanäle kann bis zu 16 betragen. In das Stirnende jedes Angießkanals 8 ist ein Mündungsstück 16 eingesetzt, das genau auf die zugehörige Anspritzöffnung der Formkammerwandung ausgerichtet und dessen Mündungsfläche geschliffen ist. Nur diese Mündungsstücke 16 liegen abdichtend an der jeweiligen Anspritzöffnung an und haben einen unmittelbaren Wärmekontakt mit der Formkammerwandung.

Der Fuß 1 ist durch einen Ringheizkörper 20 beheizt. Der Schaft 3 ist durch eine schraubenlinienförmig gewickelte Wendelrohrpatrone 9 beheizt. Die Wendelrohrpatrone ist mit veränderlicher Steigung gewickelt, um die abgegebene Heizleistung dem jeweiligen Wärmebedarf anzupassen. Innerhalb eines Längsschlitzes 10 des Schaftes 3 ist ein Thermofühler 11 angeordnet.

Der Kopf 4 trägt auf der Ringfläche 5 einen Kupferring 12, der in Nuten 13 eine spiralförmig gewickelte Wendelrohrpatrone 14 aufnimmt. Die Wendelrohrpatrone 14 beheizt direkt den Kupferring 12, von dem die Wärme auf den Kopf 4 übertragen wird. Dadurch ist eine gleichmäßige Beheizung des Kopfes 4 gewährleistet. Der Kupferring nimmt die Wärme gut auf und verteilt dieselbe gleichmäßig auf den Kopf 4. Ferner ist in den Kopf 4 ein Thermofühler 15 eingebaut. Der Kupferring 12 und die Wendelrohrpatrone 14 sind durch einen Abdeckring 17 abgedeckt, der an die Abdeckschürze 6 anschließt und mit derselben verschweißt ist. Dieser Abdeckring verhindert eine unerwünschte Wärmeabstrahlung der Wendelrohrpatrone 14 und konzentriert die abgegebene Wärme auf den Kopf 4. An den Abdeckring 17 schließt ein Schaftrohr 18 an, das den Schaft 3 und die Wendelrohrpatrone 9 umgibt.

Die Stirnfläche 19 des Kopfes 4 weist eine galvanische Wärmeisolierschicht auf. Diese verhindert nach dem Prinzip der Schwarzspiegelung eine unerwünschte Wärmeabstrahlung des Kopfes 4 im Öffnungszustand des Werkzeugs.

Die Wendelrohrpatronen 9 und 14 sowie die Thermofühler 11 und 15 sind herausgeführt, wie dies in der Zeichnung angedeutet ist. Die Anschlüsse selbst sind nicht dargestellt. Die Anschlußleitungen verlaufen in üblicher Weise in Kanälen der ebenfalls nicht dargestellten Werkzeugplatten.

Die Zentrierplatte 2 findet in einer Aufnahme einer Aufspannplatte oder Werkzeugplatte Platz, so daß dadurch die Heißkanalmehrfachangießbuchse zentriert wird. Der Kopf 4 ragt in eine Kammer der düsenseitigen Werkzeughälfte hinein. Das Zentrum 21 des Kopfes ist an einer nicht dargestellten Traverse des Werkzeugs abgestützt, um dadurch den Einspritzdruck abzufangen. Der Schaft 3 ist durch einen großen Zwischenraum von der Kammerwandung getrennt. Der Kopf 4 ist ebenfalls allseitig durch einen Zwischenraum von der Wandung des Werkzeugs getrennt. Nur die Mündungsstücke 16 liegen an den Mündungsflächen der Anspritzkanäle an und haben einen unmittelbaren Wärmekontakt mit der Formkammerwandung. Sonst ist allseitig ein Abstand zwischen der Heißkanalmehrfachangießbuchse und der Formkammerwandung vorhanden. Dadurch ist eine weitgehende Wärmeisolation gegenüber den gekühlten Werkzeugplatten gegeben. Sowohl der Schaft 3 als auch der Kopf 4 können mit Hilfe der Thermofühler 11 bzw. 15 gesondert geregelt werden, so daß eine Anpassung der Wärmezufuhr durch die jeweiligen Wendelrohrpatronen an den jeweiligen Wärmebedarf möglich ist. Dadurch kann man sowohl innerhalb des Heißkanals 7 als auch innerhalb der Angießkanäle 8 den Werkstoff auf einer Temperatur halten, die einen plastischen Zustand gewährleistet. Eine Überhitzung des Werkstoffs einerseits oder eine Unterkühlung desselben andererseits ist ausgeschlossen. Infolgedessen werden optimale Arbeitsbedingungen gewährleistet. Es treten weder Zersetzungen der Werkstoffs noch Unterkühlungen und damit im Zusammenhang Fließstrukturen innerhalb der Erzeugnisse auf.

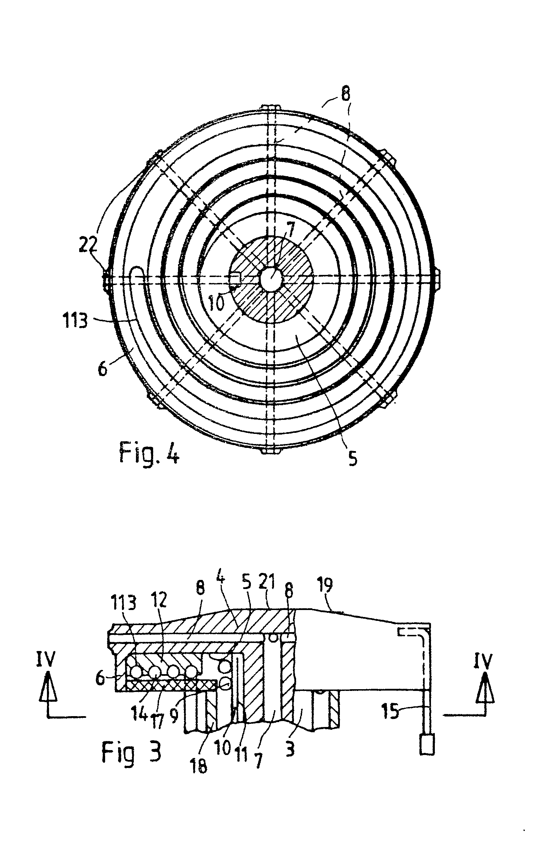

Fig. 3 zeigt eine abgewandelte Ausführung des Kopfes 4. Die Beheizung des Kopfes 4 erfolgt in gleicher Weise wie zuvor beschrieben mittels eines Kupferrings 12. Die Angießkanäle 8 enden in Mündungsansätzen 22. Diese Mündungsansätze sind im Material einheitlich mit dem Kopf 4 ausgebildet. Die Stirnflächen der Mündungsansätze 22 sind geschliffen und zur Anlage an den Mündungsflächen der Angießkanäle des Werkzeugs bestimmt. Nur diese Mündungsansätze 22 liegen an den Angießkanälen des Werkezugs an, während sonst über den Umfang des Kopfes 4 ein Spalt freibleibt. Dieses ist für den Wärmehaushalt sehr vorteilhaft, wie bereits erläutert worden ist.

In diesem Fall sind keine gesonderten Mündungsstücke erforderlich.

Die Wendelrohrpatronen 9 und 14 können auch als einheitliche Wendelrohrpatrone ausgebildet sein, die in einem Stück gewickelt ist und sowohl die Beheizung des Kopfes 4 als auch des Schaftes 3 übernimmt. In diesem Fall ist selbstverständlich nur ein Thermofühler erforderlich. Eine solche Ausbildung ist möglich, wenn eine Temperatursteuerung der Heißkanalmehrfachangießbuchse in vereinfachter Form mit einer Regelstelle möglich ist.

Die Heißkanalmehrfachangießbuchse stellt hinsichtlich des Wärmehaushalts einen weitgehenden Abschluß gegenüber den Kammerwandungen des Werkzeugs sicher und ermöglicht außerdem eine unabhängige Regelung des Kopfes und des Schaftes. Dadurch ist eine optimale Abstimmung auf die Eigenschaften des Werkstoffs und die Gegebenheiten des jeweiligen Spritzgießwerkzeugs sichergestellt.

**Patentansprüche**

1. Heißkanalmehrfachangießbuchse für seitliche Tunnelanbindung, mit einem Fuß (1) und einem durch ein Heizelement beheizten Schaft (3) und einem darin angeordneten zentralen Heißkanal (7), ferner mit einem beheizten Verteilerkopf (4), der radial ausgerichtete Angießkanäle (8) enthält, gekennzeichnet durch folgende Merkmale :

a. der Kopf (4) ist plattenförmig ausgebildet und überragt den Durchmesser des Schaftes (3) um ein Mehrfaches (Zwei- bis Fünffaches) ;

b. der Kopf (4) nimmt mindestens vier radial ausgerichtete Angießkanäle (8) auf ;

c. der Kopf (4) besitzt eine an den Schaft (3) angrenzende ebene Ringfläche (5) und eine äußere Abdeckschürze (6) ;

d. an die Ringfläche (5) ist ein Kupferring (12) angesetzt ;

e. der Kupferring (12) nimmt eine spiralförmig angeordnete Wendelrohrpatrone (14) auf.

2. Heißkanalmehrfachangießbuchse nach Anspruch 1, dadurch gekennzeichnet, daß der Kopf (4) einen Thermofühler (15) enthält.

3. Heißkanalmehrfachangießbuchse nach Anspruch 1 oder 2, dadurch gekennzeichnet, daß der Kupferring (12) eine Spiralnut (113) zur Aufnahme der Wendelrohrpatrone (14) aufweist.

4. Heißkanalmehrfachangießbuchse nach einem der Ansprüche 1 bis 3, dadurch gekennzeichnet, daß der Kupferring (12) mit der Wendelrohrpatrone (14) durch einen Abdeckring (17) abgeschlossen ist.

5. Heißkanalmehrfachangießbuchse nach einem der Ansprüche 1 bis 4, dadurch gekennzeichnet, daß auf den Schaft (3) schraubenlinienförmig eine Wendelrohrpatrone (9) gewickelt ist.

6. Heißkanalmehrfachangießbuchse nach Anspruch 5 dadurch gekennzeichnet, daß ein Schaftrohr (18) die Wendelrohrpatrone (9) des Schaftes (3) umschließt.

7. Heißkanalmehrfachangießbuchse nach Anspruch 6, dadurch gekennzeichnet, daß in einen Axialschlitz (10) des Schaftes (3) ein Thermofühler (11) eingelegt ist.

8. Heißkanalmehrfachangießbuchse nach einem der Ansprüche 1 bis 7, dadurch gekennzeichnet, daß der Fuß (1) eine gesonderte Beheizung aufweist.

9. Heißkanalmehrfachangießbuchse nach einem der Ansprüche 1 bis 8, dadurch gekennzeichnet, daß die Stirnfläche (19) des Kopfes eine galvanische Wärmeisolierschicht aufweist.

**Claims**

1. Hot-runner multiple-gating bushing for lateral tunnel gating, comprising a foot (1) and a shaft (3) heated by means of a heating element, and a hot-runner (7) arranged centrally therein, and further a heated manifold head (4) containing radially directed gating channels (8), characterized by the following features :

a. the head (4) is designed in the form of plate a and projects beyond the diameter of the shaft (3) by a multiple thereof (two to five times the diameter) ;

b. the head (4) accommodates at least four radially directed gating channels (8) ;

c. the head (4) comprises a plane annular face (5) adjacent the shaft (3) and an outer masking apron (6) ;

d. a copper ring (12) is attached to the annular face (5) ;

e. the copper ring (12) receives a helical tubular heating cartridge (14) arranged in spiral form.

2. Hot-runner multiple-gating bushing according to claim 1, characterized in that the head (4) comprises a temperature sensing element (15).

3. Hot-runner multiple-gating bushing according to claim 1 or 2, characterized in that the copper ring (12) is provided with a spiral groove (113) receiving the helical tubular heating cartridge (14).

4. Hot-runner multiple-gating bushing according to any of claims 1 to 3, characterized in that the copper ring (12) containing the helical tubular heating cartridge (14) is closed by a cover ring (17).

5. Hot-runner multiple-gating bushing according to any of claims 1 to 4, characterized in that a helical tubular heating cartridge (9) is wound upon the shaft (3) in the form of a helical line.

6. Hot-runner multiple-gating bushing according to claim 5, characterized in that the helical tubular heating cartridge (9) of the shaft (3) is enclosed in a shaft tube (18).

7. Hot-runner multiple-gating bushing according to claim 6, characterized in that a temperature sensing element (11) is received in an axial slot (10) of the shaft (3).

8. Hot-runner multiple-gating bushing according to any of claims 1 to 7, characterized in that the foot (1) is provided with separate heating means.

9. Hot-runner multiple-gating bushing according to any of claims 1 to 8, characterized in that the end face (19) of the head is provided with a galvanic heat-insulating layer.

## Revendications

1. Manchon de coulée multiple à canal chaud pour le raccordement latéral de tunnel, comportant une embase (1) et un corps (3) chauffés par un élément chauffant et au centre duquel se trouve un canal chaud (7), ainsi qu'une tête de distribution (4), chauffée qui contient les canaux de coulée (8) dirigés radialement, caractérisé par les caractéristiques suivantes :

a. la tête (4) est en forme de plaque et est plusieurs fois supérieure (entre deux et cinq fois) au diamètre du corps (3),

b. la tête (4) reçoit au moins quatre canaux de coulée (8) alignés radialement,

c. la tête (4) comporte une surface annulaire (5) plane, adjacente au corps (3) et une jupe de recouvrement (6) extérieure,

d. une bague en cuivre (12) est prévue contre la surface annulaire (5),

e. la bague en cuivre (12) reçoit une cartouche (14) d'un tube enroulé en forme de spirale.

2. Manchon de coulée multiple à canal chaud selon la revendication 1, caractérisé en ce que la tête (4) comporte un capteur de température (15).

3. Manchon de coulée multiple à canal chaud selon la revendication 1 ou 2, caractérisé en ce que la bague en cuivre (12) comporte une rainure en spirale (113) pour recevoir la cartouche formée par un tube enroulé (14).

4. Manchon de coulée multiple à canal chaud selon l'une des revendications 1 à 3, caractérisé en ce que la bague en cuivre (12) et la cartouche à tube enroulé (14) sont fermées par une bague de recouvrement (17).

5. Manchon de coulée multiple à canal chaud selon l'une des revendications 1 à 4, caractérisé en ce qu'une cartouche à tube enroulé (9) en forme d'hélice est enroulée sur le corps (3).

6. Manchon de coulée multiple à canal chaud selon la revendication 5, caractérisé en ce qu'un tube de corps (18) entoure la cartouche à enroulement en hélice (9) du corps (3).

7. Manchon de coulée multiple à canal chaud selon la revendication 6, caractérisé en ce qu'un capteur de température (11) est placé dans une fente axiale (10) du corps (3).

8. Manchon de coulée multiple à canal chaud selon l'une des revendications 1 à 7, caractérisé en ce que la base (1) comporte un moyen de chauffage particulier.

9. Manchon de coulée multiple à canal chaud selon l'une des revendications 1 à 8, caractérisé en ce que la surface frontale (19) de la tête comporte une couche galvanique d'isolation thermique.

Fig.1

Fig.2

1

Fig. 4

Fig 3